# EUROPÄISCHE PATENTSCHRIFT

(11) **EP 0 929 980 B1**
(45) Veröffentlichungstag und Bekanntmachung des Hinweises auf die Patenterteilung: **10.03.2004**
(21) Anmeldenummer: 97909153.5
(22) Anmeldetag: 18.09.1997
(51) Int. Cl.: H04Q 3/62, H04M 3/46

(54) **KOMMUNIKATIONSSYSTEM AUS MINDESTENS ZWEI NEBENSTELLENANLAGEN MIT TEAMFUNKTION**
COMMUNICATION SYSTEM CONSISTING OF AT LEAST TWO PRIVATE BRANCH EXCHANGES (PBX) WITH TEAM FUNCTION
SYSTEME DE COMMUNICATION CONSTITUE D'AU MOINS DEUX INSTALLATIONS D'ABONNES AVEC POSTES SUPPLEMENTAIRES A FONCTION D'EQUIPE

(30) Priorität: 30.09.1996 DE 19640221
(43) Veröffentlichungstag der Anmeldung: 21.07.1999
(73) Patentinhaber: SIEMENS AKTIENGESELLSCHAFT, 80333 München (DE)
(72) Erfinder: WILLE, Klaus, D-81679 München (DE)
(86) Internationale Anmeldenummer: PCT/DE1997/002114
(87) Internationale Veröffentlichungsnummer: WO 1998/015135

(56) Entgegenhaltungen:
- DEHLEN H: "VERNETZTE TK-ANLAGEN OHNE GRENZEN" NTZ NACHRICHTENTECHNISCHE ZEITSCHRIFT, Bd. 45, Nr. 9, 1.September 1992, Seiten 714-716, 718 - 721, XP000310768
- RICHTER L: "INTELLIGENTE PRIVATE TELEKOMMUNIKATIONSNETZE" NTZ NACHRICHTENTECHNISCHE ZEITSCHRIFT, Bd. 47, Nr. 11, 1.November 1994, Seiten 782-785, XP000479977
- LE GOURRIEREC M: "RESEAU PRIVE A INTEGRATION DE SERVICES UTILISANT PARALLELEMENT LIGNES LOUEES ET CIRCUITS DU RESEAU PUBLIC COMMUTE" ONDE ELECTRIQUE, Bd. 72, Nr. 5, 1.September 1992, Seiten 29-35, XP000312078
- J. EBERSPÄCHER: "CORPORATE NETWORKS - ANFORDERUNGEN UND ZIELE" TELCOM REPORT, Bd. 16, Nr. 5, 1.September 1993, Seiten 232-237, XP000415353
- EBERL L H ET AL: "INTEGRATED ISDN D-SERVER FOR INTELLIGENT NETWORKING" COMMUNICATIONS TECHNOLOGY FOR THE 1990'S AND BEYOND, DALLAS, NOV. 27 - 30, 1989, Bd. 1 OF 3, 27.November 1989, INSTITUTE OF ELECTRICAL AND ELECTRONICS ENGINEERS, Seiten 539-542, XP000091154
- HOCHREUTER D ET AL: "HICOM 300 1 EINE VIELFALT NEUER MOGLICHKEITEN" TELCOM REPORT, Bd. 18, Nr. 5, 1.September 1995, Seiten 265-267, XP000543153
- FLIEDNER B: "PRIVATE NETZE AUF DEM WEG IN DIE ZUKUNFT DURCHGANGIGE SERVICELEISTUNGEN SICHERN MARKTCHANCEN FUR UNTERNEHMEN" TELCOM REPORT, Bd. 18, Nr. 2, 1.März 1995, Seiten 75-77, XP000510937

## Beschreibung

Die Erfindung betrifft ein Kommunikationssystem, das aus mindestens zwei Nebenstellenanlagen, jeweils mit einer Vermittlungssteuerung und mindestens einem Vermittlungsknoten, der über eine Netzanschlußeinrichtun an mindestens ein übergeordnetes Kommunikationsnetz angeschlossen ist und über mindestens eine Teilnehmeranschlußeinrichtung an Endgeräte angeschlossen ist, wobei in einer der Nebenstellenanlagen eine Teamfunktionssteuerung vorgesehen ist, die bestimmte Endgeräte als über den Vermittlungsknoten dieser Nebenstellenanlage anrufbare Teamendgeräte eines Teams gemäß einer Teamfunktion steuert und hierbei abhängig vom vermittlungstechnischen Zustand einzelner Teamendgeräte eine Signalisierung zu anderen Teamendgeräten veranlaßt sowie deren vermittlungstechnischen Zustand beeinflußt.

Ein solches Kommunikationssystem ist z.B. aus dem Artikel von H. Dehlen: "Vernetzte TK-Anlagen ohne Grenzen"; NTZ Nachrichtentechnische Zeitschrift, Bd. 45, Nr. 9, 1.september 1992, Seiten 714-721, XP000310768, bekannt.

Solche zusammengeschalteten Nebenstellenanlagen, von denen in mindestens einer eine Teamfunktion realisiert ist, sind u.a. in Form der von der Siemens AG kommerziell vertriebenen Nebenstellenanlage HICOM 300 bekannt. Eine bekannte Teamfunktion ist beispielsweise die Funktion "Anrufübernahme", bei der kommende Rufe innerhalb einer Anrufübernahmegruppe aus mehreren Endgeräten angezeigt werden und an jedem Endgerät, das zur Anrufübernahmegruppe gehört, entgegengenommen werden kann. Eine andere bekannte Teamfunktion ist die Funktion "Sammelanschluß", der unter einer speziellen Sammelnummer erreichbar ist. Hierbei kann jeder Teilnehmer eines Sammelanschlusses auch unmittelbar über eine individuelle Rufnummer angerufen werden. Über die spezielle Sammelnummer werden jedoch alle Teilnehmer erreicht. Die Sammelnummer ist beispielsweise einem Master-Endgerät zugeordnet.

Eine weitere bekannte Teamfunktion ist die integrierte Vorzimmeranlage, die auch Chef-Sekretär-Anlage genannt wird.

Bei bekannten Kommunikationssystemen sind alle Teilnehmer eines Teams an eine einzige Nebenstellenanlage angeschlossen und werden über dieselbe Netzanschlußeinrichtung an ein übergeordnetes Kommunikationsnetz vermittelt.

Aufgabe der Erfindung ist es, ein Kommunikationssystem bereitzustellen, bei dem eine Teamfunktion auch mit abgesetzten Teamteilnehmern realisierbar ist.

Diese Aufgabe löst die Erfindung durch ein Kommunikationssystem mit den Merkmalen des Anspruches 1.

Erfindungsgemäß ist vorgesehen, daß mindestens ein erstes Teamendgerät des Teams unmittelbar über eine Teilnehmeranschlußeinrichtung an einen Vermittlungsknoten der ersten Nebenstellenanlage angeschlossen ist und mindestens ein zweites Teamendgerät als abgesetzter Teilnehmer des Teams über eine Teilnehmeranschlußeinheit an einen Vermittlungsknoten der zweiten Nebenstellenanlage als Endgerät angeschlossen ist, wobei dieser abgesetzte Teilnehmer über den Vermittlungsknoten der ersten Nebenstellenanlage, eine Hotline-Verbindung zwischen der ersten und der zweiten Nebenstellenanlage und einen Vermittlungsknoten der zweiten Nebenstellenanlage erreichbar ist.

In der zweiten Nebenstellenanlage ist eine Teamfunktionssubsteuerung vorgesehen, um einen von dem Teamendgerät ins übergeordnete Kommunikationsnetz abgehenden Ruf über die Hotline-Verbindung und den Vermittlungsknoten der ersten Nebenstellenanlage zu vermitteln und bei einer Störung der Hotline-Verbindung oder des Vermittlungsknotens der ersten Nebenstellenanlage einen von dem zweiten Teamendgerät abgehenden Ruf über die Netzanschlußeinrichtung der zweiten Nebenstellenanlage zu vermitteln.

Der Anschluß von Teamendgeräten als abgesetzte Teilnehmer über eine Hotline-Verbindung ermöglicht es, Teilnehmer eines Teams innerhalb eines Firmennetzes in beliebigem räumlichem Abstand zueinander anzuordnen.

Die erfindungsgemäße Teamfunktionssubsteuerung in der Nebenstellenanlage, an die das Teamendgerät des abgesetzten Teilnehmers unmittelbar angeschlossen ist, stellt sicher, daß auch bei Ausfall der Hotline-Verbindung zu dem Heimat-Vermittlungsknoten des Teams oder bei Ausfall dieses Heimat-Vermittlungsknotens von Teamendgeräten abgesetzter Teilnehmer abgehende Rufe in das übergeordnete Kommunikationsnetz vermittelt werden können.

Eine besonders günstige Ausgestaltungsform eines erfindungsgemäßen Kommunikationssystems sieht vor, daß die Teamfunktionssubsteuerung die Verfügbarkeit des Vermittlungsknotens der ersten Nebenstellenanlage und die Verfügbarkeit der Hotline-Verbindung zwischen den beiden Nebenstellenanlagen durch Prüfung der für die transparente Übertragung der Teilnehmer-zu-Teilnehmer-Meldungen für die abgesetzten Teilnehmer erforderlichen Signalisierungsverbindung erfaßt. In diesem Fall benötigt die Verfügbarkeitsprüfung keine B-Kanal-Ressourcen. Außerdem ist keine zusätzliche Signalisierung erforderlich.

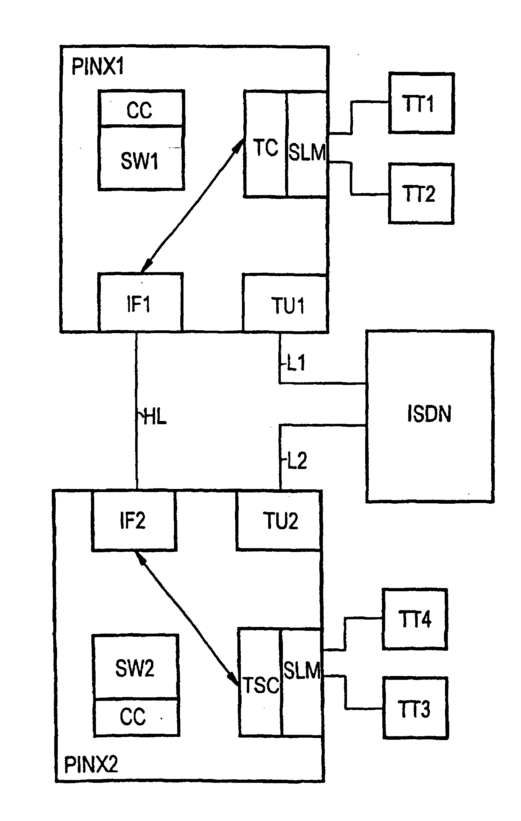

Nachstehend wird die Erfindung anhand eines Ausführungsbeispiels unter Bezugnahme auf die Figur näher erläutert.

Die Figur zeigt in schematischer Blockdarstellung ein erfindungsgemäßes Kommunikationssystem.

Die schematische Blockdarstellung der Figur zeigt ein Kommunikationssystem, bestehend aus einer ersten Nebenstellenanlage PINX1 mit einer Vermittlungssteuerung CC, einem ersten Vermittlungsknoten SW1, einer Teamfunktionssteuerung TC und einer ersten Netzanschlußeinrichtung TU1, die über eine Ver-4 bindung L1 mit einem übergeordneten Kommunikationsnetz ISDN verbunden ist. Zwei Teamendgeräte TT1 und TT2 sind jeweils über eine Teilnehmeranschlußeinrichtung SLM an den ersten Vermittlungsknoten SW1 angeschlossen und werden von der Teamfunktionssteuerung TC gesteuert. Die Teamfunktionssteuerung TC steuert außerdem eine Verbindung zu einer ersten Hotline-Schnittstelle IF1.

Die zweite Nebenstellenanlage PINX2 enthält eine Vermittlungssteuerung CC und einen zweiten Vermittlungsknoten SW2, an den u.a. über eine Teilnehmeranschlußeinrichtung SLM zwei Teamendgeräte TT3 und TT4 angeschlossen sind. Die zweite Nebenstellenanlage PINX2 ist über eine zweite Netzanschlußeinrichtung TU2 und eine Verbindung L2 an das übergeordnete Kommunikationsnetz ISDN angeschlossen.

Eine Teamfunktionssubsteuerung TSC steuert die Teamendgeräte TT3 und TT4 und außerdem eine Verbindung zu einer zweiten Hotline-Schnittstelle IF2. Die erste Hotline-Schnittstelle IF1 der ersten Nebenstellenanlage PINX1 ist über eine Hotline-Verbindung HL mit der zweiten Hotline-Schnittstelle IF2 der zweiten Nebenstellenanlage PINX2 verbunden.

Die Teamfunktionssubsteuerung veranlaßt das Vermitteln eines von dem Teamendgerät ins übergeordnete Kommunikationsnetz abgehenden Rufs über die Hotline-Verbindung und den Vermittlungsknoten der ersten Nebenstellenanlage. Bei einer Störung der Hotline-Verbindung oder des Vermittlungsknotens der ersten Nebenstellenanlage veranlaßt die Teamfunktionssubsteuerung das Vermitteln eines von dem zweiten Teamendgerät abgehenden Rufs über die Netzanschlußeinrichtung der zweiten Nebenstellenanlage.

## Patentansprüche

1. Kommunikationssystem, bestehend aus mindestens einer ersten Nebenstellenanlage (PINX1) mit einer Vermittlungssteuerung (CC) und mindestens einem ersten Vermittlungsknoten (SW1), der über eine erste Netzanschlußeinrichtung (TU1) an mindestens ein übergeordnetes Kommunikationsnetz (ISDN) angeschlossen ist und über mindestens eine Teilnehmeranschlußeinrichtung (SLM) an Endgeräte (TT1, TT2) angeschlossen ist, und bestehend aus mindestens einer zweiten Nebenstellenanlage mit einer Vermittlungssteuerung (CC) und mindestens einem zweiten Vermittlungsknoten (SW2), der über eine zweite Netzanschlußeinrichtung (TU2) an das übergeordnete Kommunikationsnetz (ISDN) angeschlossen ist und über mindestens eine Teilnehmeranschlußeinrichtung (SLM) an Endgeräte (TT3, TT4) angeschlossen ist, wobei in der ersten Nebenstellenanlage (PINX1) eine Teamfunktionssteuerung (TC) vorgesehen ist, die bestimmte Endgeräte als über den ersten Vermittlungsknoten (SW1) anrufbare Teamendgeräte eines Teams gemäß einer Teamfunktion steuert und hierbei abhängig vom vermittlungstechnischen Zustand einzelner Teamendgeräte eine Signalisierung zu anderen Teamendgeräten veranlaßt sowie deren vermittlungstechnischen Zustand beeinflußt, **dadurch gekennzeichnet, daß** mindestens ein erstes Teamendgerät (TT1, TT2) des Teams unmittelbar über eine Teilnehmeranschlußeinrichtung (SLM) an den ersten Vermittlungsknoten (SW1) als Endgerät angeschlossen ist und mindestens ein zweites Teamendgerät (TT3, TT4) als abgesetzter Teilnehmer des Teams über eine Teilnehmeranschlußeinheit (SLM) an den zweiten Vermittlungsknoten (SW2) angeschlossen ist und über den ersten Vermittlungsknoten (SW1), eine Hotline-Verbindung (HL) zwischen dem ersten und dem zweiten Vermittlungsknoten (SW1, SW2) und den zweiten Vermittlungsknoten (SW2) erreichbar ist, und daß eine Teamfunktionssubsteuerung (TSC) in der zweiten Nebenstellenanlage (PINX2) vorgesehen ist, um einen von dem zweiten Teamendgerät (TT3, TT4) ins übergeordnete Kommunikationsnetz (ISDN) abgehenden Ruf über die Hotline-Verbindung (HL) und den ersten Vermittlungsknoten (SW1) zu vermitteln und bei einer Störung des ersten Vermittlungsknotens (SW1) oder der Hotline-Verbindung (HL) einen von dem zweiten Teamendgerät (TT3, TT4) abgehenden Ruf über die Netzanschlußeinrichtung (TU2) der zweiten Nebenstellenanlage zu vermitteln.

2. Kommunikationssystem nach Anspruch 1, **dadurch gekennzeichnet, daß** die Teamfunktionssubsteuerung (TSC) eine Verfügbarkeit des ersten Vermittlungsknotens (SW1) und der Hotline-Verbindung (HL) zwischen dem ersten und dem zweiten Vermittlungsknoten (SW1, SW2) durch Prüfung der für die transparente Übertragung der Teilnehmer-zu-Teilnehmer-Meldungen für die abgesetzten Teilnehmer erforderlichen Signalisierungsverbindung prüft.

## Claims

1. Communications system comprising at least one first private branch exchange (PINX1) with a switching controller (CC) and at least one first switching node (SW1), which is connected via a first network connection device (TU1) to at least one higher-order communications network (ISDN) and is connected via at least one user access device (SLM) to terminals (TT1, TT2), and comprising at least one second private branch exchange with a switching controller (CC) and at least one second switching node (SW2), which is connected via a second network connection device (TU2) to the higher-order communications network (ISDN) and via at least one user access device (SLM) to terminals (TT3, TT4), whereby a team function controller (TC) is provided in the first private branch exchange (PINX1), which controls specific terminals as team terminals of a team which can be called via the first switching node (SW1) according to a team function and hereby initiates signaling to other team terminals based on the switching status of individual team terminals and influences their switching status, **characterized in that** at least one first team terminal (TT1, TT2) of the team is connected directly via a user access device (SLM) to the first switching node (SW1) as a terminal and at least one second team terminal (TT3, TT4) is connected as a remote user of the team via a user access unit (SLM) to the second switching node (SW2) and can be accessed via the first switching node (SW1), a hot line connection (HL) between the first and second switching nodes (SW1, SW2) and the second switching node (SW2), and that a team function subcontroller (TSC) is provided in the second private branch exchange (PINX2) in order to switch an outgoing call from the second team terminal (TT3, TT4) to the higher-order communications network (ISDN) via the hotline connection (HL) and the first switching node (SW1) and, in the event of failure of the first switching node (SW1) or the hotline connection (HL), to switch an outgoing call from the second team terminal (TT3, TT4) via the network connection device of the second private branch exchange.

2. Communications system according to Claim 1, **characterized in that** the team function subcontroller (TSC) verifies the availability of the first switching node (SW1) and the hotline connection (HL) between the first and second switching nodes (SW1, SW2) by testing the signaling connection required for remote users for the transparent transmission of user to user messages.

## Revendications

1. Système de communication, comprenant au moins une première installation à postes supplémentaires (PINX1) ayant une commande de commutation (CC) et au moins un premier noeud de commutation (SW1), lequel est raccordé, par l'intermédiaire d'un premier dispositif de raccordement au réseau (TU1), à au moins un réseau de communication de niveau supérieur (ISDN) et lequel est raccordé, par l'intermédiaire de au moins un dispositif de raccordement d'abonnés (SLM), à des terminaux (TT1, TT2), et comprenant au moins une deuxième installation à postes supplémentaires ayant une commande de commutation (CC) et au moins un deuxième noeud de commutation (SW2), lequel est raccordé, par l'intermédiaire d'un deuxième dispositif de raccordement au réseau (TU2), au réseau de communication de niveau supérieur (ISDN) et lequel est raccordé, par l'intermédiaire de au moins un dispositif de raccordement d'abonnés (SLM), à des terminaux (TT3, TT4), une commande de fonction de groupe (TC) étant prévue dans la première installation à postes supplémentaires (PINX1), laquelle contrôle, conformément à une fonction de groupe, certains terminaux en tant que terminaux de groupe accessibles par l'intermédiaire du premier noeud de commutation (SW1), laquelle provoque, en fonction de l'état de commutation de certains terminaux de groupe, une signalisation vers d'autres terminaux de groupe et qui influence leur état de commutation, **caractérisé par le fait que** au moins un premier terminal (TT1, TT2) du groupe est raccordé directement comme terminal, par l'intermédiaire d'un dispositif de raccordement d'abonné (SLM), au premier noeud de commutation (SW1) et au moins un deuxième terminal (TT3, TT4) est raccordé comme abonné déporté du groupe, par l'intermédiaire d'une unité de raccordement d'abonnés (SLM), au deuxième noeud de commutation (SW2), et est accessible par l'intermédiaire du premier noeud de commutation (SW1), d'une liaison directe (HL) entre le premier et le deuxième noeud de commutation (SW1, SW2) et du deuxième noeud de commutation (SW2) et qu'une sous-commande de fonction de groupe (TSC) est prévue dans la deuxième installation à postes supplémentaires (PINX2) pour commuter un appel partant du deuxième terminal de groupe (TT3, TT4) vers le réseau de communication de niveau supérieur (ISDN) en passant par la liaison directe (HL) et le premier noeud de commutation (SW1) et pour commuter, en cas de dérangement du premier noeud de commutation (SW1) ou de la liaison directe (HL), un appel partant du deuxième terminal de groupe (TT3, TT4) en passant par le dispositif de raccordement au réseau (TU2) de la deuxième installation à postes supplémentaires.

2. Système de communication selon la revendication 1 **caractérisé par le fait que** la sous-commande de fonction de groupe (TSC) vérifie une disponibilité du premier noeud de commutation (SW1) et de la liaison directe (HL) entre le premier et le deuxième noeud de commutation (SW1, SW2) en contrôlant la liaison de signalisation nécessaire à la transmission transparente des messages d'abonné à abonné destinés aux abonnés déportés.
